# EUROPEAN PATENT SPECIFICATION

(11) **EP 3 612 390 B1**
(45) Date of publication and mention of the grant of the patent: **07.06.2023**
(21) Application number: 17919281.0
(22) Date of filing: 28.07.2017
(51) Int. Cl.: B22F 10/28, B22F 10/73, B29C 64/153, B29C 64/165, B29C 64/314, B29C 64/357, B33Y 10/00, B33Y 30/00, B33Y 40/20, B33Y 40/00

(54) **THREE-DIMENSIONAL PRINTER**
DREIDIMENSIONALER DRUCKER
IMPRIMANTE TRIDIMENSIONNELLE

(43) Date of publication of application: 26.02.2020
(73) Proprietor: Hewlett-Packard Development Company, L.P., Spring TX 77389 (US)
(72) Inventor: SCHALK, Wesley R., Vancouver, Washington 98683 (US); ENGLISH, Kris M., Vancouver, Washington 98683 (US); MIRANDA, Shannon, Vancouver, Washington 98683 (US); SWIER, Kevin E., Corvallis, Oregon 97330-4239 (US)
(74) Representative: Haseltine Lake Kempner LLP
(86) International application number: PCT/US2017/044320
(87) International publication number: WO 2019/022754

(56) References cited:
- EP-B1- 1 700 686
- EP-B1- 1 700 686
- WO-A2-2017/015217
- US-A1- 2005 263 934
- US-A1- 2014 265 034
- US-A1- 2015 108 687
- US-A1- 2015 367 446

## Description

### BACKGROUND

Additive manufacturing (AM) may include three-dimensional (3D) printing to form 3D objects. In particular, a 3D printer may add successive layers of material under computer control to produce the 3D object. Indeed, in some AM processes, successive layers of material are formed under computer control to fabricate the object. The material may be powder, or powder-like materials, including metal, plastic, composite material, and other powders. The objects can be various shapes and geometries, and produced via a model such as a 3D model or other electronic data source. The fabrication may involve laser melting, laser sintering, electron beam melting, or thermal fusion, and so on. The model and automated control may facilitate the layered manufacturing and additive fabrication. As for products, AM may fabricate intermediate and end-use products, as well as prototypes. Applications may include aerospace (e.g., aircraft), machine parts, medical devices (e.g., implants), automobile parts, fashion products, structural and conductive metals, ceramics, conductive adhesives, semiconductor devices, and other applications. EP 1 700 686 B1 relates to a laser sintering powder recycle system. US 2014/265034 A1 relates to 3D printing using spiral buildup.

According to the present invention there is provided a three-dimensional printer as defined in claim 1 and a method of operating a three-dimensional printer as defined in claim 13.

### DESCRIPTION OF THE DRAWINGS

Certain examples are described in the following detailed description and in reference to the drawings, in which:
Fig. 1 is a block diagram of a 3D printer in accordance with examples of the present techniques;
Fig. 2 is a block diagram of a 3D printer in accordance with examples of the present techniques;
Fig. 3 is a block diagram of a 3D printer in accordance with examples of the present techniques;
Fig. 4 is a block diagram of a 3D printer in accordance with examples of the present techniques;
Fig. 5 is a schematic diagram of a 3D printer in accordance with examples of the present techniques;
Fig. 6 is a block flow diagram of a method of operating a 3D printer in accordance with examples of the present techniques;
Fig. 7 is a schematic diagram of a 3D printer in accordance with examples of the present techniques;
Fig. 8 is a schematic diagram of a 3D printer process in accordance with examples of the present techniques; and
Fig. 9 is a schematic diagram of a 3D printer in accordance with examples of the present techniques.

### DETAILED DESCRIPTION

A 3D printer may form on a build surface a 3D object from build material such as powder. A user may lift containers or bags of the build material, which may be relatively heavy, above their waist to introduce the build material into an upper portion of the 3D printer. For instance, the user may empty the build material from the bags or containers above a build chamber having the build platform or directly into the build chamber.

In contrast, examples of the present techniques are directed to a 3D printer handling of build material, and to the 3D printer receipt of build material into a lower portion of the 3D printer. Further, in some examples, the user may introduce the build material to the printer in removable cartridges that contain the build material. Moreover, 3D printer handling of build material may include handling of new material and recycle material.

An example of a 3D printer has an outer housing and a cartridge receiver integrated with the 3D printer at least partially within the outer housing. The cartridge receiver is disposed closer to the bottom surface of the outer housing than to the top surface of the outer housing. Also, the cartridge receiver could be disposed equidistant to the top surface and bottom surface. In other examples, the cartridge receiver may be closer to the top surface than to the bottom surface. In one example, the cartridge receiver is slightly above the midpoint between the top surface and bottom surface, such as less than 6 inches (15.24 cm) above the midpoint. The cartridge receiver is to receive a removable material cartridge to make build material available from the material cartridge as build material for printing. The 3D printer includes a pneumatic conveyance system to convey the build material to an upper portion of the 3D printer.

Another example of a 3D printer includes an outer casing and having a build enclosure integrated within the outer casing. The build enclosure may be a build bucket, build chamber, build container, and so on. The build enclosure receives build material for the 3D printer to print or generate a 3D object. Further, the 3D printer includes a cartridge receiver integrated within the outer casing and disposed closer to the bottom surface of the outer casing than to the top surface of the outer casing. The cartridge receiver is to receive a removable material cartridge to accept build material into the material cartridge from the 3D printer and to make available build material from the material cartridge. A conveying system integrated in the 3D printer conveys or transports the build material to an upper region of the 3D printer above the build enclosure.

An example of a method of operating a 3D printer includes printing or forming a 3D object from build material. This may, for example, include from one or more of fresh build material and recycle material. The method includes providing the build material to an upper portion of the 3D printer from a recycle material cartridge disposed in a cartridge receiver in the 3D printer, wherein the cartridge receiver is disposed closer to a bottom surface of the 3D printer than to a top surface of the 3D printer. Lastly, the method includes receiving excess material into the recycle material cartridge in the cartridge receiver from the printing of the 3D object.

Examples include 3D printers that may form a 3D object from the build material via a build platform. The build platform may be associated with a build enclosure. The build enclosure may be a build bucket, build container, or build chamber, and the like. The 3D printer may have an internal conveying system to transport build material up to feed equipment for the build enclosure and build platform. As discussed below for some examples, the conveying system delivers the build material up to a selective solidification module disposed at least partially above the build enclosure.

According to the invention, the conveying system receives build material from a recycle material vessel. In certain examples, the conveying system may receive build material from a material cartridge or a material vessel, or both. Indeed, the 3D printer includes a cartridge receiver that holds the material cartridge. The cartridge receiver may be a cavity, receptacle, slot, sleeve, or any combinations thereof. The material cartridge may be an enclosure to contain build material. Again, the 3D printer forms the 3D object from the material. The material may be metal, plastic, polymer, glass, ceramic, or other material. The material cartridge held by the cartridge receiver may receive material from the 3D printer and make material available to the 3D printer for printing of the 3D object.

One of the cartridge receivers may receive a first cartridge containing new material. Another cartridge receiver may receive a second cartridge containing recycle material, or may receive an empty cartridge to collect excess or unfused build material from within the 3D printer as recycle material. Such recycle material may be excess material from the build enclosure that is not sintered or fused during the current or previous print jobs. In operation a 3D printer may recover a quantity of recycle material during and after a build operation. Some of the recycle material may be reused during a subsequent print operation. Generally about 80% of recycle material may be mixed with 20% fresh material, but you could also use 100% fresh material, or 100% recycle material, or some mix in between. Over time the amount of recycle material stored in the printer can grow and some of it will have to be removed from the printer.

Recycle material cartridges may be removed and stored for future use or discarded. Once a new or fresh material cartridge has been emptied by the 3D printer, the empty fresh material cartridge may be inserted into the second cartridge receiver to receive unfused recycle material. The 3D printer includes vessels, such as separate internal vessels, to store fresh or recycle material received from either the material cartridges or the build enclosure. In certain examples, the vessels may be removed from the 3D printer and emptied. Alternatively, the vessels may be emptied by feeding build material stored therein to the build enclosure, to a material cartridge, or other vessels. Moreover, if the vessels are sufficiently filled with material, the 3D printer may operate without the insertion of material cartridges in some examples. Also, in particular examples, the material cartridges may be rotated within the 3D printer to de-aggregate material that has been stored for extended periods of time in the 3D printer.

A 3D printer may have one or more material cartridge receivers or slots that receive a material cartridge. If a single slot is present, the slot may hold a material cartridge to provide material to the 3D printer and also remove material from the 3D printer. An example of a 3D printer with two slots is with one slot for "new" material and the second slot for "recycle" material. Other examples may have more than two slots for material cartridges or could also have just a single slot with routing to and from a different internal vessel. The new or fresh material slot may hold a material cartridge that supplies or otherwise provides material to the build enclosure for printing of the 3D object. In contrast, the recycle material slot may hold a material cartridge that receives material from the 3D printer. The material entering the material cartridge in the recycle material slot may be surplus material left over or otherwise not used in the printing of the 3D object. When a new material cartridge is fully depleted, e.g., when the 3D printer has consumed the contents of the new material cartridge, the emptied new material cartridge may be removed by the user and re-purposed for later use in the recycle material slot. In one example, the empty cartridge may act as a recycle material cartridge in a slot or in a recycle material slot may receive unused material, e.g., unused powder, from the printer during and/or at the conclusion of a print job. The material cartridge in the recycle material slot containing recycle material may then supply or otherwise provide recycle material for printing. Again, examples of 3D printers may include more than two cartridge slots.

User removal of the emptied new-material cartridge may generally occur soon or immediately after emptying, so the 3D printer can be replenished with more new material from another new material cartridge. However, the re-installation or reuse of the empty and now "recycle" cartridge may not occur for some time. The empty recycle cartridge may be stored until desired that material from the printer be received into a cartridge. In other words, the user may retain this empty recycle cartridge for future use. Indeed, the user may store many of the empty or partially empty recycle cartridges. The 3D printer may request the user to re-install an empty or not completely full recycle cartridge in a slot or the recycle material slot. Moreover, multiple material types may be employed by a 3D printer at different times and therefore labels, markings, indicators, or other techniques may facilitate accounting of recycle material types in the recycle cartridges.

The recycle material cartridge in the recycle cartridge slot or receiver may receive excess build material from the conveying system or build enclosure. Indeed, the recycle material cartridge and associated slot in the 3D printer may receive excess material from the build enclosure and, therefore, facilitate offloading of excess material. In fact, a recycle cartridge in the single slot or the second slot of the 3D printer may receive excess build material from the build enclosure during or after printing. A completed print operation may involve the removal of unfused powder from the build chamber.

As discussed, full or partially filled, recycle cartridges may supply recycle material to the build enclosure, or be removed for future use, and the like. Some of these cartridges containing recycle material may remain in place in the printer, or may be removed and stored or discarded. Some of these recycle cartridges filled with recycle material may be removed and kept for future use such as when the 3D printer is short of recycle material, e.g., when the recycle material may be mixed with new material and consumed during printing. In certain examples of a 3D printer with a single slot for a material cartridge, a new material cartridge may be inserted in the slot and have the contents thereof emptied into an internal storage vessel. The cartridge could then become a recipient for recycle material.

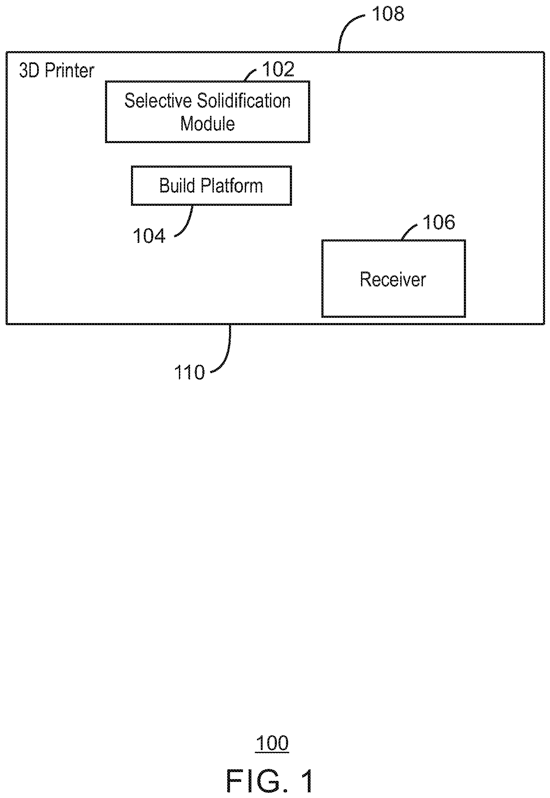

Fig. 1 is a block diagram of a 3D printer 100 in accordance with examples of the present techniques. The 3D printer 100 may include a selective solidification module 102 to selectively solidify portions of successive layers of a build material on a build platform 104. The selective solidification module 102 may be disposed over a build enclosure. Together, the build enclosure and the build platform 104 may constitute a build unit. The build unit may be operationally removable or not operationally removable. The 3D printer may also include a cartridge receiver 106 to hold a build material cartridge. The cartridge receiver 106 may be a cavity, a receptacle, a slot, a sleeve, or any combinations thereof. The cartridge may be a material cartridge that is an enclosure to contain the material. The material cartridge may accept excess material from the build enclosure and make material available for the build enclosure for printing of the 3D object. Alternatively, or in addition, material stored in an internal storage container or vessel may be fed to the build enclosure. The printing of the 3D object may involve the formation of the 3D object from the material discharged by the cartridge receiver 106 from the material cartridge inserted therein. The material may be a powder composed, for example, of plastic, polymer, metal, glass, ceramic, or any combinations thereof.

The 3D printer 100 may include a feed vessel or dispense vessel to receive the material made available by the material cartridge. A powder spreader may receive the material from the feed vessel and disperse the material across a surface of the build platform 104 in the build enclosure. An energy source, such as a light source or a laser, may sinter, melt, or fuse the material on the build platform 104 to form a first layer of a 3D object. The powder spreader may disperse more material across the surface of the build platform 104 for the next layer. The additional material may be sintered, melted, or fused to form the next layer of the 3D object. These actions may be repeated and continue until the 3D object is completely formed or substantially completely formed. In one example the printer may additionally include a printhead to print patterns of a fusing agent corresponding to portions of a layer of build material to be solidified. The fusing agent may absorb energy from a light or heat source to cause build material on which fusing agent has been printed to heat up sufficiently to melt and fuse. A printhead may draw agent from agent loaded into an agent receiver at a height between 17 inches (43.18 cm) and 42 inches (106.68 cm) from the bottom surface of the printer 100.

The cartridge receiver 106 may be a recycle cartridge receiver. As such, the cartridge may be a recycle material cartridge. The recycle material cartridge may contain recycle material. Recycle material may be unfused material left over or otherwise excess in the 3D printing. The cartridge receiver 106 as a recycle cartridge receiver may make available recycle material from the recycle material cartridge for the build enclosure and build platform 104. Again, in the build enclosure, a 3D object is formed from the recycle material on the build platform 104.

The 3D printer outer housing may have a top surface 108 and a bottom surface 110. The top surface 108 of the outer housing may be a region of the outer housing furthest away from a ground surface that the 3D printer is resting on. The bottom surface 110 of the outer housing may be a region of the outer housing closest to the ground surface that the 3D printer is resting on. In other words, the bottom surface 110 may be a surface or portion of the outer housing closest to the ground, floor, or surface that the 3D printer is disposed or rests. Indeed, in one example, the bottom surface 110 may be in contact with the ground or floor.

The cartridge receiver 106 is lower in elevation than the selective solidification module 102. The conveying system transports the build material from a material cartridge in the cartridge receiver 106, or from a material vessel, up to the selective solidification module. In some examples, the cartridge receiver 106 integrated within the outer housing of the 3D printer 100 may be disposed closer to the bottom surface 110 than to the top surface 108. This lower location of the cartridge receiver 106 may improve ease of access and reduce effort by a user to load a cartridge into the cartridge receiver 106. In an example, an integrated conveyance system refers to a conveyance system that is within the outer housing of the 3D printer 100. In an example, an integrated conveyance system refers to a conveyance system that is not disposed outside of the 3D printer 100.

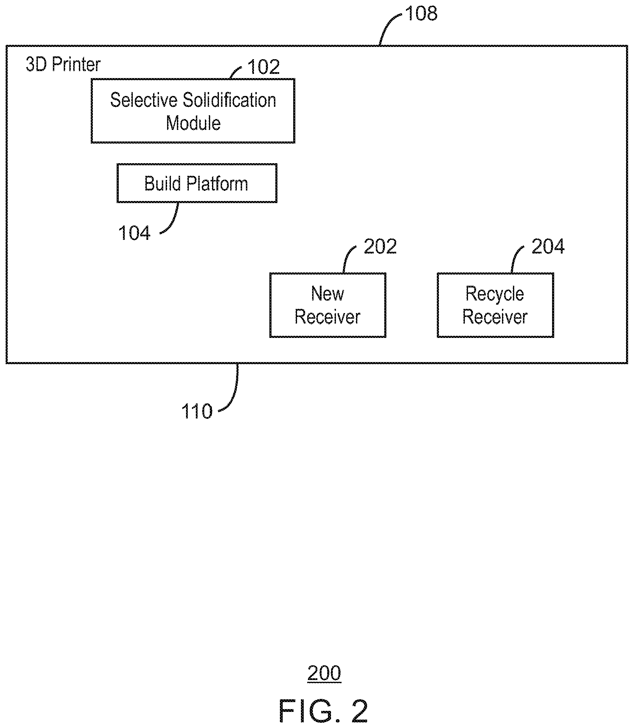

Fig. 2 is a block diagram of a 3D printer 200 in accordance with examples of the present techniques. Like numbered items are as described with respect to Fig. 1.

The 3D printer 200 may include a new cartridge receiver 202 to hold a new material cartridge. The new cartridge receiver 202 may make new material available from the new material cartridge for a build enclosure for printing of a 3D object. The printer 200 also includes a recycle cartridge receiver 204 to hold a recycle material cartridge. The recycle cartridge receiver 204 may make recycle material available from the recycle material cartridge for the build enclosure for printing of the 3D object. The 3D printer 200 may feed new material and recycle material to the build enclosure at a specified ratio of new material to recycle material. The ratio may be a weight ratio, volume ratio, or other ratio. The ratio may range from zero, e.g., no new material, all recycle material, to 1.0, e.g., all new material, no recycle material. For example, the ratio as a weight ratio or volume ratio may range from 0.01 to 0.99, 0.05 to 0.95, 0.1 to 0.9, 0.15 to 0.85, 0.2 to 0.8, 0.25 to 0.75, 0.3 to 0.7, etc. In one example, the feed material to the build enclosure may be 20% new material and 80% recycle material based on weight, yielding a weight ratio of 0.25. In another example, the feed material to the build enclosure may be 20% new material and 80% recycle material based on volume, yielding a volume ratio of 0.25.

The 3D printer outer housing may have a top surface 108 and a bottom surface 110 as described above. The 3D printer 100, via a conveying system within the 3D printer, may provide for having the new cartridge receiver 202 and the recycle cartridge receiver 204 lower than the selective solidification module 102. The new cartridge receiver 202 and the recycle cartridge receiver 204 are integrated within the outer housing of the 3D printer 100 and may be disposed closer to the bottom surface 110 than to the top surface 108. These lower locations of the new cartridge receiver 202 and the recycle cartridge receiver 204 may improve ease of access and reduce effort by a user to load a new cartridge or a recycle cartridge into the cartridge receivers 202 and 204, respectively. The locations of the cartridge receivers 202 and 204 are lower than the top surface 108 of the 3D printer 200. In some examples, the locations of the new cartridge receivers 202 and 204 are high enough such that crouching or hunching by a user may be generally avoided when the user installs or inserts a material cartridge into the receivers 202 or 204. In an example, the new cartridge receiver 202 can be located at about knee height of a typical user. In an example, the new cartridge receiver 202 can be located at about waist height of a typical user, or between knee height and waist height.

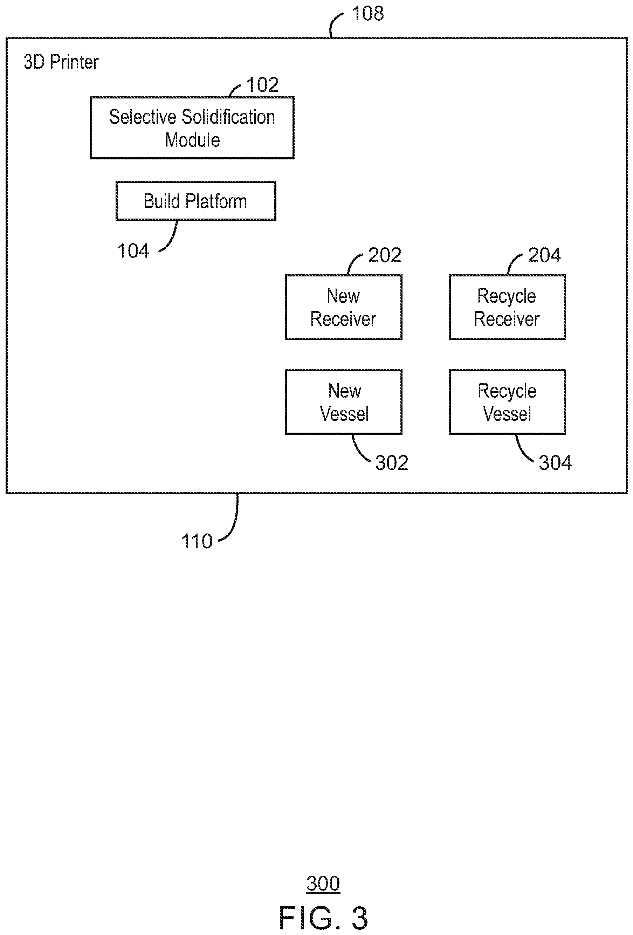

Fig. 3 is a block diagram of a 3D printer 300 in accordance with examples of the present techniques. Like numbered items are as described with respect to Fig. 1 and Fig. 2.

The 3D printer 300 may include a new material vessel 310 internal in the printer 300 and disposed near the new cartridge receiver 202, and may receive new material from the new material cartridge in the new cartridge receiver 202. Likewise, a recycle material vessel 304 may be disposed internal in the printer 300 near the recycle cartridge receiver 204 and may receive recycle material from the recycle material cartridge in the recycle cartridge receiver 204.

The new material and recycle material may be gravity fed or otherwise conveyed to the new material vessel 302 and the recycle material vessel 304, respectively. Fig. 3 shows the new material vessel 302 and the recycle material vessel 304 below new cartridge receiver 202 and the recycle cartridge receiver 204. In an example, the new material vessel 302 and the recycle material vessel 304 may be disposed above the new material cartridge receiver 202 and the recycle material cartridge receiver 204, respectively. The vessels may function through a conveyance system other than gravity to transport material between them. In some examples, this employment of a conveyance system, such as a pneumatic conveyance system, may facilitate the new material cartridge receiver 202 and the recycle cartridge receiver 204 disposed closer to the bottom surface of the outer housing than the new material vessel 302 and the recycle material vessel 304.

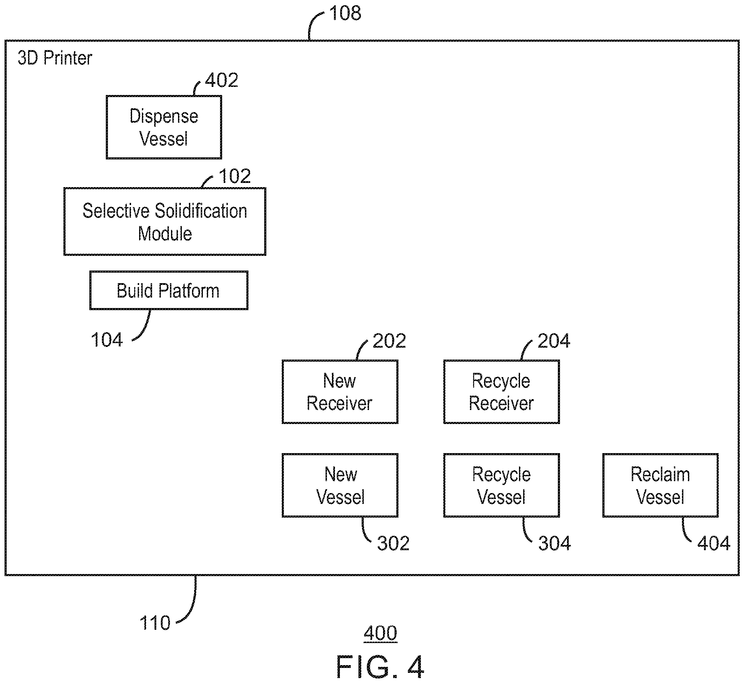

Fig. 4 is a block diagram of a 3D printer 400 in accordance with examples of the present techniques. Like numbered items are as described with respect to Fig. 1, 2, and 3.

The 3D printer 400 includes a conveyance system to convey the new material from the new material vessel 302 and the recycle material from the recycle material vessel 304 to the dispense vessel 402. The conveyance system may be a pneumatic conveyance system, a mechanical conveyance system, or a system where the powder moves by the force of gravity, etc. The dispense vessel 402 supplies the new material and the recycle material to the selective solidification module 102. In some examples, the dispense vessel 402 is a component of the conveyance system.

The 3D printer 400 may have a reclaim vessel 404 to recover material from, for example, a build enclosure and the build platform 102. The material so recovered may be classified as 100% recycle material, or instead classified as reclaim material having the specified ratio of recycle material to new material. Other classifications are applicable. In the first instance with the recovered material classified as 100% recycle material, the reclaim vessel 404 may be labeled or characterized as a second recycle vessel in the illustrated example. Moreover, the reclaim vessel 404 may provide residence time for the recycle material or reclaim material to cool. The material recovered and stored in the reclaim vessel 404 may be returned to the build platform 102 during the current print job or a subsequent print job.

In an example, the reclaim vessel 404 may receive recycle material if the recycle vessel 304 is full. Alternatively, recycle material from full recycle material cartridges that have been stored may be added to the reclaim vessel 404 so that the recycle material may be consumed by the 3D printer 400. The conveyance system may convey recycle material to the dispense vessel 402 from the reclaim vessel 404. Indeed, material from the reclaim vessel 404 may be added to the dispense vessel 402. In examples, the specified ratio of new material to recycle material in the dispense vessel 402 may be maintained.

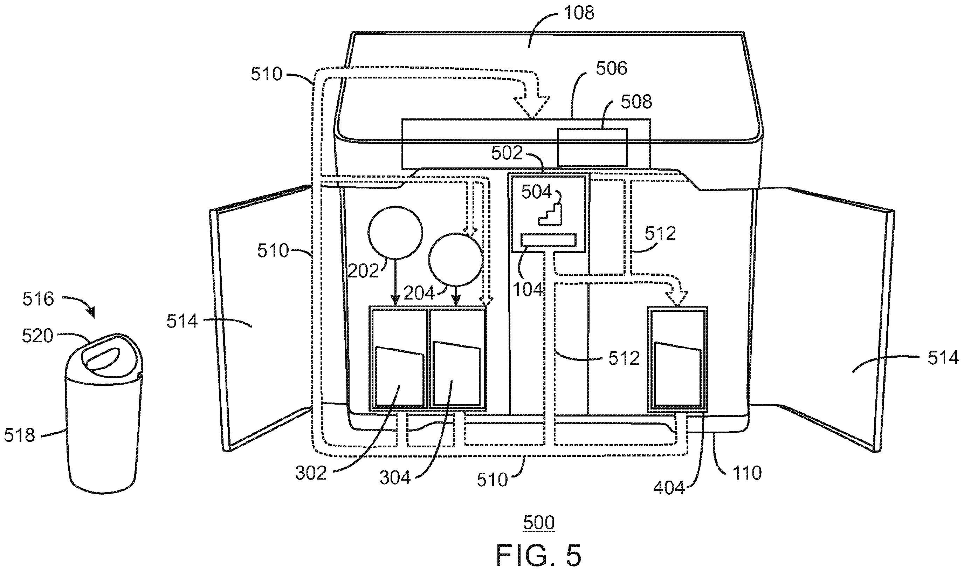

Fig. 5 is a schematic diagram of a 3D printer 500 in accordance with examples of the present techniques. Like numbered items are as described with respect to Fig. 1, 2, 3, and 4.

The 3D printer 500 may include a build enclosure 502 which may be associated with the build platform 104 on which a 3D object 504 is formed from feed material. As discussed, the feed material or build material may be composed of new material and recycle material, and other material. The build enclosure 504 may be a build bucket, build chamber, build container, or build housing, or the like.

The printer 500 may include a selective solidification module 506 to selectively solidify successive layers of build material on the build platform 104 to form the 3D object 504. For example, the selective solidification module 506 may include an energy source such as a heat source, light source, laser, etc. Thus, the selective solidification module 506 to solidify the build material may mean the module 506 to apply energy from the energy source to the build material on the build platform 104 to sinter, melt, and/or fuse the build material to form the 3D object 504.

The selective solidification module 506 may include a build-material applicator 508 to distribute feed material or build material across the upper surface of the build platform 104. Examples of a build-material applicator 508 include a powder spreader, powder spreader arm, a powder spreader roller, or other type of applicator. Further, in some examples, the build-material applicator 508 may reside on and be moved by a carriage in the selective solidification module 506. The selective solidification module 506 may also include additional components on the carriage or on other carriages, such as the energy source, printbar in some examples, and so forth. Lastly, in certain examples, the build-material applicator 508 may not be a component of the selective solidification module 506 but instead a separate component disposed at an upper portion of the printer 500 above the build enclosure 502.

To store material, the 3D printer 500 may include a new material vessel 302 to receive new material from the new material cartridge and a recycle material vessel 304 to receive recycle material from the recycle material cartridge. The material cartridge 516 may have new material, recycle material, or is empty prior to insertion to the printer 500. Further, the printer 500 includes a conveying system 510 to transport new material and recycle material. The conveyance system 510 may include a pneumatic conveyance system, a mechanical conveying system, a vacuum system, gravity conveying, vibration conveying, belt conveying system, auger system, and so forth, or any combinations thereof. In the illustrated example, the new material from the new material vessel 302 and the recycle material from the recycle material vessel 304 may be fed to a leg of the conveying system 510. The new material and recycle material may progress upward through the 3D printer towards the selective solidification module 506. The new material and the recycle material may intermingle in-line and thus mix in the conveyance system 510 as the new material and the recycle material move through the conveyance system 510.

The printer 300 may include a second conveying system 512 to recover build material from the build enclosure 502. In some examples, the second conveying system 512 as a pneumatic conveyance system or vacuum system applies a vacuum to pull spill-over or excess build material from the build enclosure 502. In a particular example, the second conveying system 512 includes a conduit manifold at a bottom portion of the build enclosure 502 to receive build material from the build enclosure 502 via the vacuum. In one example, the manifold may be labeled as a perimeter vacuum. In the illustrated example, excess build material may be conveyed, via the second conveying system 512, from the build enclosure 502 to the reclaim vessel 404 or other destination.

The material recovered in the reclaim vessel 404 may be build material collected from the build enclosure 502 during the execution of a print job. In an example, incidental powder spill-over from the build platform 104 could be returned as reclaim powder to the build enclosure 502 during the same print job as the reclaim powder may generally have the specified ratio of recycle material to new material for that print job. In other examples, the excess build material from the build enclosure 502 may be recovered to the reclaim vessel 404 during and/or after the print job and the recovered material classified, for example, as 100% recycle material.

The reclaim vessel 404 could be selected as an initial destination for material coming from the build enclosure. In an example, the material may be a powder that may be relatively hot, but more stable at cooler temperatures. In an example, routing the material via the second conveying system 512 to the reclaim vessel 404 as an initial recovered-material destination may provide residence time in the reclaim vessel 404 for any hot material to cool. After cooling, material in the reclaim vessel 404 may be transported by the conveying system 510 to the selective solidification module 506, to a recycle cartridge in the recycle cartridge receiver 204, or to the recycle material vessel 304, and so on.

Again, as indicated for some examples, the reclaim vessel 404 receives excess unused powder from the build enclosure 502 after a print job is complete, not during the print job. In an example, the recycle material may not be returned to the build enclosure 502 until a subsequent print job. In an example, the recycle material may not be returned to the build enclosure 502 until after the 3D object 504 has been removed and the next 3D object 504 is being formed. In some examples, material that arrives in a recycle vessel 304, recycle cartridge, or reclaim vessel 404 may be classified as recycle material even though a portion of the material may be new material not consumed in the 3D object 504.

The 3D printer 500 is shown with the printer outside housing or casing having front access panels 514. A portion of an interior of the printer 500 is visible. These access panels 514 may close to conceal and further protect components of the 3D printer 500. Components inside or partially inside the outer housing of the 3D printer, including inside the access panels 514, can be considered integrated within the 3D printer 500 in certain examples.

In one example, the 3D printer 500 includes an outer housing with a top surface 108 and a bottom surface 110 of the outer housing. The cartridge receiver 202 can be integrated within the outer housing and disposed closer to the bottom surface than to the top surface 108, and with the cartridge receiver 202 to hold a material cartridge having build material. The 3D printer 500 can include the conveyance system 510 to convey the build material to the selective solidification module 506. In one example, the cartridge receiver 202 may be disposed more than 20 inches (50.8 cm) from the bottom surface 110 of the outer housing. In an example, the cartridge receiver 202 may be disposed at a height in a range of 17 inches (43.18 cm) to 42 inches (106.68 cm) above the bottom surface 110 of the outer housing. In one example, the cartridge receiver 202 may be disposed less than 42 inches (106.68 cm) from the bottom surface 110 of the outer housing. In one example the build unit may be at a height 40 inches (101.6 cm) from the bottom surface 110 of the outer housing and the cartridge receiver 202 located below that. Lastly, Fig. 5 depicts a material cartridge 516 that may be inserted into cartridge receiver 202 or the cartridge receiver 204. The cartridge as depicted is only an example, and may include a container or housing 518 to contain or hold material such as new material or recycle material. In particular examples, the material cartridge 516 has a handle to facilitate user-lifting if the material cartridge 516 and user-insertion of the cartridge 516 into the cartridge receiver 202 or 204. In one example, the handle may also facilitate the user to rotate the cartridge 516 when inserting the cartridge 516 into the receiver 202 or 204 to secure the cartridge 516 in the receiver 202 or 204.

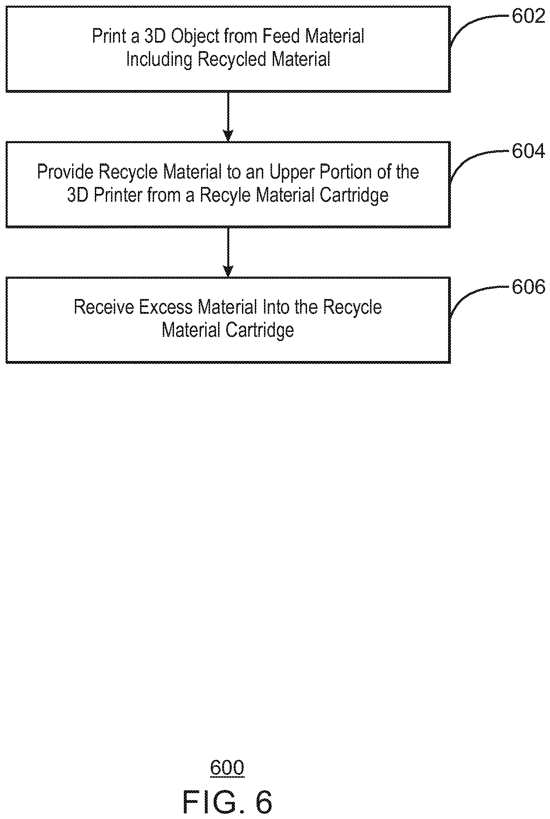

Fig. 6 is a block flow diagram of a method 600 of operating a 3D printer in accordance with examples of the present techniques. At block 602, the method includes printing a 3D object from feed material including recycle material. The feed material may also include new material. The printing may involve forming or generating the 3D object from the feed material as build material. Indeed, the printing of the 3D object may include forming the 3D object from the feed material on a build platform of the 3D printer. In some examples, the 3D object is formed layer-by-layer and may involve the 3D printer employing an energy source to fuse, sinter, or melt the feed material on the build platform.

At block 604, the method includes providing the recycle material to an upper portion of the 3D printer from a recycle material cartridge disposed in a cartridge receiver in the 3D printer. For example, the method may include providing the recycle material via a pneumatic conveyance system to above a build platform. Moreover, in this method, the cartridge receiver is disposed closer to a bottom surface of the 3D printer than to a top surface of the 3D printer.

At block 606, the method includes receiving excess material into the recycle material cartridge in the cartridge receiver from the printing of the 3D object. For example, the excess material so received may be excess material recovered from a build enclosure or build platform of the 3D printer.

Again, the 3D object may be printed from feed material composed of new material and recycle material. The feed material may have a specified weight ratio or volume ratio of new material to recycle material in a range from zero to 1.0. For example, the weight ratio may range from 0.01 to 0.99, 0.05 to 0.95, 0.1 to 0.9, 0.15 to 0.85, 0.2 to 0.8, 0.25 to 0.75, 0.3 to 0.7, etc. The new material may be provided by a new material cartridge receiver having a new material cartridge in the 3D printer. Alternatively, or in addition, a new material vessel may store and provide the new material. In some examples, the new material vessel, if employed, may be disposed below the new material cartridge, and the new material vessel supplied by the new material cartridge.

In 3D printers having a new material vessel and a recycle material vessel, the new material and the recycle material may be conveyed from the new material vessel and the recycle material vessel to a build enclosure for printing of a 3D object. The new material and the recycle material may mix in-line as being conveyed to the build enclosure as feed material having the specified or desired ratio of new material to recycle material. Again, the ratio may be a weight ratio, volume ratio, or other ratio. Moreover, instead of being fed directly to the build enclosure, the feed material may be conveyed through a dispense vessel to a build-material applicator or selective solidification module above the build enclosure. In some examples, the dispense vessel may supply feed material to the build enclosure via the build-material applicator such as a powder spreader or powder spreader arm.

Because of the techniques described herein, a 3D printer may select new material, recycle material, or a mix of new material and recycle material as appropriate. The closed-loop material handling system may reduce powder lost to the environment. Some examples may not use external dedicated resources, floor space separate from the printer, or external equipment to mix powder or extract 3D objects from unfused powder.

In addition, the techniques described herein may facilitate handling of recycle material. Recycle material within a 3D printer may be loaded into cartridges and then removed and stored for future use. Furthermore, technique for adding and removing material from the 3D printer is provided in examples. In certain examples, recycle material may remain substantially free of external contaminants, and a substantially-closed loop material handling may reduce the potential of unknown material entering the 3D printer.

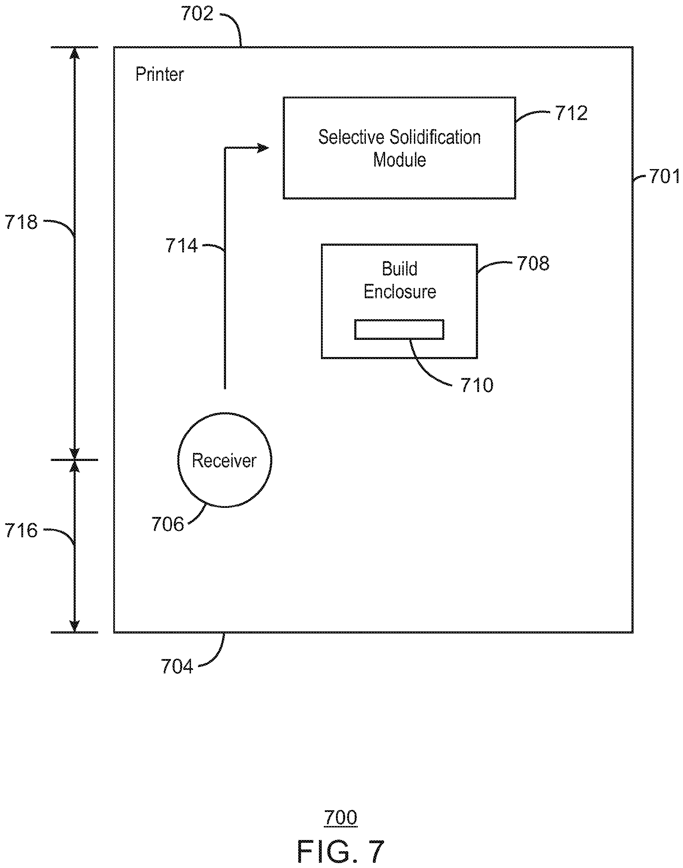

Fig. 7 is a schematic diagram of a 3D printer 700 in accordance with examples of the present techniques. The 3D printer 700 has an outer housing or casing with a top surface 702 and a bottom surface 704. In the illustrated example, the top surface 702 and the bottom surface 704 may each be generally parallel with the floor or surface on which the outer housing of the printer 700 is disposed or rests. The 3D printer has a cartridge receiver 706 integrated in the 3D printer at least partially within the outer housing, and receives and holds a material cartridge (not shown). The cartridge receiver 706 is disposed closer to the bottom surface 704 than to the top surface 702.

The 3D printer 700 can build a 3D object within a build enclosure 708 on a build platform 710 from build material. In particular, the 3D printer 700 can generate a 3D object from build material on the build platform 710 with a selective solidification module 712. The build material may include material from the material cartridge held by the cartridge receiver 706. Again, in the illustrated example, the cartridge receiver 706 is located closer to the bottom surface 704 than to the top surface 702.

The printer may move material from within the material cartridge held by the cartridge receiver 706 to the selective solidification module 712 via an integrated conveying system 714. In an example, the conveying system 714 is a pneumatic conveyance system. Moreover, in this example, the cartridge receiver 706 is at a height lower than the selective solidification module 712.

In some examples, the cartridge receiver 706 is at a distance 716 in a range of about 20 inches (50.8 cm) to about 42 inches (106.68 cm) above the bottom surface 704 of the outer housing or casing of the printer 700. The distance 716 may be a perpendicular distance to the bottom surface 704. In the illustrated example, this distance 716 is less than the distance 718 between the cartridge receiver 706 and the top surface 702. The distance 718 may be parallel to the distance 716. In one example, the distance 718 is in a range of 30 inches (76.2 cm) to 50 inches (127 cm).

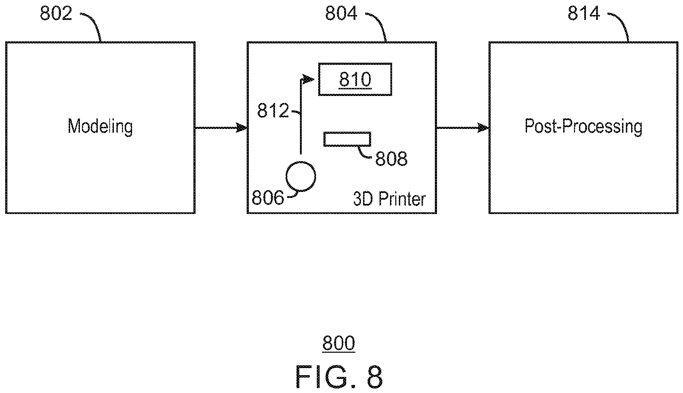

Fig. 8 is a schematic diagram of an AM system 800 in accordance with examples of the present techniques. The AM system 800 includes a modeling system 802 and a 3D printer 804. The 3D printer 804 may be analogous to one or more of the 3D printers depicted in the preceding figures. The AM system 800 may involve 3D printing performed by the 3D printer 804 as a materials printer using digital technology. In certain examples, the AM including 3D printing may form 3D solid objects from a digital model. Indeed, the AM system 800 may include the modeling system 802 to receive a model, prepare the received model, or generate a model, and the like, for 3D printing. The model may be a 3D model. Moreover, the model may be "sliced" in preparation for the layer-by-layer printing. Digital data may be obtained from electronic data sources other than a model.

The model or other electronic source may provide digital 3D design data for the 3D printer 804 to build a component or product in layers by depositing material and fusing, sintering, melting, solidifying, etc., portions of the material. Such AM may be in contrast to milling a workpiece from solid block, for example. The 3D printer 804 relying on the model may build the product layer-by-layer employing materials, for example, in powder form. A range of different metals, plastics, and composite materials may be used. Unlike subtractive manufacturing techniques that start with a solid block of material and then cut away the excess to create a finished part, AM may build a part layer-by-layer from geometry described in a 3D design model. Subtractive manufacturing or subtractive machining may be employed in conjunction with 3D printing in certain examples.

The AM system 800 includes one or more printers 804 to print the 3D solid object. The solid object may be a product which may be a full product, a part of a product, a prototype, and so on. Again, 3D printing may make 3D solid objects from a digital file. An object may be created by laying down successive layers of material until the object is created. In some instances, each of these layers can be seen as a thinly sliced horizontal cross-section of the eventual object. The 3D printing may involve sintering, melting, fusing, or fusion of the material or powder by energy sources such as a laser, electron beam, light, ultraviolet light, radiation, infrared, near infrared, heat, heating lamps, and so forth. Indeed, the 3D printing may include selective layer sintering (SLS), selective heat sintering (SHS), and electron beam melting (EBM), thermal fusion, or other AM printing techniques.

The 3D printer 804 includes a cartridge receiver 806 to hold a removable material cartridge to make build material available for a selective solidification module 810 and a build platform 808. The cartridge receiver 806 is disposed relatively lower in the printer 804. For example, the cartridge receiver may reside in a lower portion of the printer 804, such as closer to the bottom of the printer 804 than to the top of the printer 804.

The 3D printer 804 includes a build platform 808 on which the 3D object is printed and formed from build material such as powder. The build platform 808 may be associated with a build enclosure (not shown). New powder and recycle powder may be fed to the build platform 808 for fabrication of the 3D object. Further, the 3D printer 804 includes the selective solidification module 810 adjacent to and above the build platform 808. The selective solidification module 810 performs the fusing, sintering, melting, solidifying, etc. that generates the 3D object from the build material on the build platform 808. Material is moved through the 3D printer 804 by a conveying system 812. The conveying system 812 transports build material to the selective solidification module 810.

The AM system 800 may include a post-processing system 814 to perform finishing or other processing of the 3D object. The post-processing system 814 may involve support removal, powder removal, sanding, bead blasting, vapor smoothing, painting, electroplating, metal-machining, polishing, and the like. Some of these post-processing features may be integrated in the 3D printer 804.

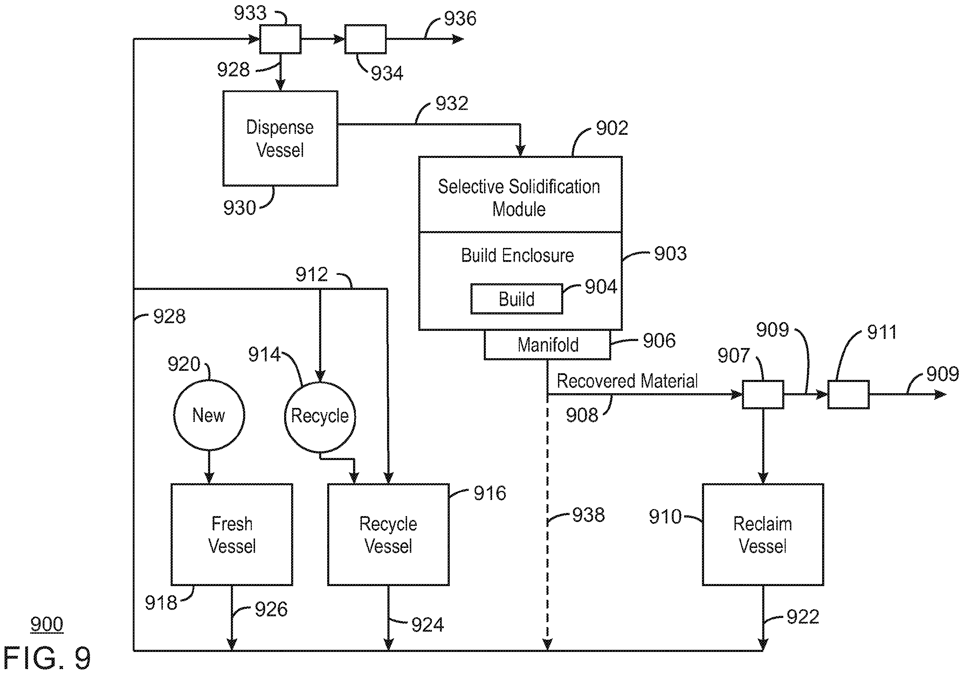

Fig. 9 is a schematic diagram of a 3D printer 900 in accordance with examples of the present techniques. The 3D printer 900 may include a selective solidification module 902 and a build platform 904. A build enclosure 903 may be associated with the build platform. In some examples, the build enclosure 903 at least partially contains the build platform 904. Feed material or build material (e.g., powder) may be provided to the selective solidification module 902 or to the build enclosure 903.

A manifold 906 may withdraw excess material or excess powder, e.g., powder not becoming part of a 3D object, from the build enclosure 903 as recovered material 908. The manifold 906 may be operationally coupled to a motive component 911 such as a vacuum pump, a blower, a steam jet, or any combinations thereof. The recovered material 908 may be conveyed via the manifold 906 and motive component 911 to a reclaim vessel 910. The recovered material 908 and conveying fluid (e.g., air) may flow through a separation system 907. The separation system may include a cyclone, filter, etc. to separate conveying fluid 909 from the recovered material 908. The separated conveying fluid 909 may discharge through the motive component 911, such as to the environment or to other equipment for additional processing. The separation system 907 or the reclaim vessel 910 may include sieves, screens, filters, etc. to separate larger particles (e.g., agglomerated or partially-fused particles) from the recovered material 908.

The recovered material 908 may bypass the reclaim vessel 910, as indicated by reference numeral 938, and be transported via a feed conveying system to, for example, a recycle material cartridge in a recycle cartridge receiver 914 or to a recycle material vessel 916, as indicated by reference number 912. The recycle material vessel 916 may also be provisioned by the recycle material cartridge in the recycle cartridge receiver 914. Likewise, a new material vessel 918 may be supplied by a new material cartridge in the new cartridge receiver 920. The recycle cartridge receiver 914 and the new cartridge receiver may be disposed closer to the bottom of the printer 900 than to the top of the printer 900.

Moreover, the recovered material 908 may be combined with recycle material 924 and fresh or new material 926. The recycle material vessel 916 and the new material vessel 918 may provide the recycle material 924 and new material 926, respectively. In some examples, the recycle material 924 and the new material 926 may be provided to give a desired or specified ratio (e.g., weight ratio or volume ratio) of new material 926 to recycle material 924. The recovered material 908 may have the desired or specified ratio of new material 926 to recycle material 924, or may be classified as recycle material. The feed material 928 fed to the dispense vessel 930 and thermal fusion system 902 may include recycle material 924, new material 926, or the recovered material 908, or any combinations thereof. The various materials 924, 926, and 908 may mix in-line as the feed 928 is in route to the dispense vessel 930 in certain examples.

In some examples, the feed 928 may include recovered material 922 from the reclaim material vessel 910, recycle material 924 from the recycle material vessel 916, and new material 926 from the new material vessel 918. In examples or operations without recovered material 922, the new material 926 and recycle material 924 may form the feed material 928 as the material is transported to the dispense vessel 930. The dispense vessel 930 may provide the feed material 928 as build material 932 to the thermal fusion system 902. Alternatively, the dispense vessel 930 may provide the build material 932 to the build platform 904. A control system may facilitate the feed material 928 composition and build material 932 composition having a specified ratio of new material to recycle material. The control system may deliver a specified ratio by metering the weight or volume of material dispensed from the new material vessel 918 and recycle material vessel 916.

In the illustrated example, the reclaim material 922, recycle material 924, and new material 926 may be fed as feed material 928 to a dispense vessel 930. The 3D printer 900 may include a conveying system to facilitate transport of the feed material 928 to the dispense vessel 930 and to the build enclosure 930. In some examples, a pneumatic conveying system is employed. If so, the pneumatic conveying system may include a vacuum component 934 which may be a steam jet, or blower, or any combinations thereof. The pneumatic conveying air 936 may discharge through the vacuum component(s) 934. The feed material 932 minus most or all of the conveying air may flow, e.g., by gravity, air flow, etc., from the dispense vessel 930 to the build enclosure 903 or to other printer components for printing of a 3D object on the build platform 904. In one example, the feed build material flows out of the dispense vessel 930 to a build-material applicator to spread build material across the build platform 904 at the build enclosure 903. In a particular example, the build-material applicator includes a dosing box and a powder spreader.

While the present techniques may be susceptible to various modifications and alternative forms, the examples discussed above have been shown by way of example. It is to be understood that the technique is not intended to be limited to the particular examples disclosed herein. Indeed, the present techniques include all alternatives, modifications, and equivalents falling within the scope of the claims.

## Claims

1. A three-dimensional (3D) printer comprising:
an outer housing comprising a top surface (108) and a bottom surface (110);
a cartridge receiver (204) integrated with the 3D printer at least partially within the outer housing and disposed below a top of a build enclosure of the 3D printer, the cartridge receiver to receive a recycle material cartridge (516) to make material available from the material cartridge as build material for printing; and **characterized by**:
a recycle material vessel (304) to receive recycle material from the recycle material cartridge;
a conveying system (510) to transport the recycle material from the recycle material vessel to an upper portion of the 3D printer.

2. The 3D printer of claim 1, comprising the build enclosure and a build platform (104) to form a 3D object from build material on the build platform, wherein the conveying system (510) comprises a pneumatic conveyance system.

3. The 3D printer of claim 2, comprising a build-material applicator to distribute build material across the build platform (104), wherein the pneumatic conveyance system to transport build material to the build-material applicator.

4. The 3D printer of claim 3, wherein the build-material applicator comprises a powder spreader disposed closer to the top surface of the outer housing than to the cartridge receiver.

5. The 3D printer of claim 2, comprising a selective solidification module (102) disposed above the build platform (104) to selectively solidify successive layers of build material on the build platform to form the 3D object, wherein solidify comprises melt, sinter, or fuse, or any combinations thereof.

6. The 3D printer of claim 1, wherein the cartridge receiver (204) is disposed closer to the bottom surface (110) than to the top surface (108).

7. The 3D printer of claim 6, wherein the cartridge receiver (204) is disposed more than 20 inches (50.8 cm) above the bottom surface (110) of the outer housing.

8. The 3D printer of claim 1, wherein the cartridge receiver (204) is disposed less than 42 inches (106.68 cm) above the bottom surface (110) of the outer housing.

9. The 3D printer of claim 6, wherein the cartridge receiver (204) is integrated within the outer housing.

10. The 3D printer of claim 9, comprising the build enclosure within the outer casing, the build enclosure to receive build material for the 3D printer to print a 3D object, and the cartridge receiver (204) is disposed at a height in a range of 17 inches (43.18 cm) to 42 inches (106.68 cm) above the bottom surface (110) of the outer housing.

11. The 3D printer of claim 9, wherein the integrated conveying system (510) comprises a pneumatic conveyance system.

12. The 3D printer of claim 9, comprising a build platform (104) at least partially within the build enclosure and on which a 3D object is formed from the build material.

13. A method of operating a three-dimensional (3D) printer, comprising:
providing a recycle material cartridge into a cartridge receiver in the 3D printer, wherein the cartridge receiver is disposed below a top of a build enclosure; and
printing (602) a 3D object from feed material comprising recycle material;
the method **characterized by**:
receiving (606) excess material into the recycle material cartridge in the cartridge receiver from the printing of the 3D object;
receiving, in a recycle material vessel, recycle material from the recycle material cartridge; and
providing (604), via a conveyance system, recycle material from the recycle material vessel to an upper portion of the 3D printer.

14. The method of claim 13, wherein printing the 3D object comprises forming the 3D object from the feed material on a build platform associated with the build enclosure of the 3D printer, wherein providing the recycle material to an upper portion of the 3D printer comprises providing the recycle material via a pneumatic conveyance system to above the build platform, and wherein the cartridge receiver is disposed closer to a bottom surface of the 3D printer than to a top surface of the 3D printer.

## Patentansprüche

1. Dreidimensionaler (3D) Drucker, der Folgendes umfasst:
eine Außeneinhausung, die eine obere Oberfläche (108) und eine untere Oberfläche (110) umfasst;
einen Kartuschenempfänger (204), der in dem 3D-Drucker mindestens teilweise innerhalb der Außeneinhausung integriert und unterhalb einer Oberseite eines Baugehäuses des 3D-Druckers angeordnet ist, wobei der Kartuschenempfänger dazu dient, eine Rückführungsmaterialkartusche (516) zu empfangen, um Material aus der Materialkartusche als Baumaterial zum Drucken zur Verfügung zu stellen; und **gekennzeichnet durch:**
ein Rückführungsmaterialgefäß (304), um Rückführungsmaterial aus der Rückführungsmaterialkartusche zu empfangen;
ein Fördersystem (510), um das Rückführungsmaterial aus dem Rückführungsmaterialgefäß zu einem oberen Teil des 3D-Druckers zu transportieren.

2. 3D-Drucker nach Anspruch 1, der das Baugehäuse und eine Bauplattform (104) umfasst, um ein 3D-Objekt aus Baumaterial auf der Bauplattform auszubilden, wobei das Fördersystem (510) ein pneumatisches Fördersystem umfasst.

3. 3D-Drucker nach Anspruch 2, der einen Baumaterialapplikator umfasst, um Baumaterial über die Bauplattform (104) hinweg zu verteilen, wobei das pneumatische Fördersystem dazu dient, Baumaterial zu dem Baumaterialapplikator zu transportieren.

4. 3D-Drucker nach Anspruch 3, wobei der Baumaterialapplikator einen Pulverstreuer umfasst, der näher an der oberen Oberfläche der Außeneinhausung als an dem Kartuschenempfänger angeordnet ist.

5. 3D-Drucker nach Anspruch 2, der ein selektives Verfestigungsmodul (102) umfasst, das über der Bauplattform (104) angeordnet ist, um aufeinanderfolgende Schichten von Baumaterial auf der Bauplattform selektiv zu verfestigen, um das 3D-Objekt auszubilden, wobei ein Verfestigen Schmelzen, Sintern oder Verschweißen oder beliebige Kombinationen davon umfasst.

6. 3D-Drucker nach Anspruch 1, wobei der Kartuschenempfänger (204) näher an der unteren Oberfläche (110) als an der oberen Oberfläche (108) angeordnet ist.

7. 3D-Drucker nach Anspruch 6, wobei der Kartuschenempfänger (204) mehr als 20 Zoll (50,8 cm) über der unteren Oberfläche (110) der Außeneinhausung angeordnet ist.

8. 3D-Drucker nach Anspruch 1, wobei der Kartuschenempfänger (204) weniger als 42 Zoll (106,68 cm) über der unteren Oberfläche (110) der Außeneinhausung angeordnet ist.

9. 3D-Drucker nach Anspruch 6, wobei der Kartuschenempfänger (204) innerhalb der Außeneinhausung integriert ist.

10. 3D-Drucker nach Anspruch 9, der das Baugehäuse innerhalb der Außenhülle umfasst, wobei das Baugehäuse dazu dient, Baumaterial für den 3D-Drucker zu empfangen, um ein 3D-Objekt zu drucken, und der Kartuschenempfänger (204) auf einer Höhe in einem Bereich von 17 Zoll (43,18 cm) bis 42 Zoll (106,68 cm) über der unteren Oberfläche (110) der Außeneinhausung angeordnet ist.

11. 3D-Drucker nach Anspruch 9, wobei das integrierte Fördersystem (510) ein pneumatisches Fördersystem umfasst.

12. 3D-Drucker nach Anspruch 9, der eine Bauplattform (104) umfasst, die mindestens teilweise innerhalb des Baugehäuses ist und auf der ein 3D-Objekt aus dem Baumaterial ausgebildet ist.

13. Verfahren zum Betreiben eines dreidimensionalen (3D) Druckers, das Folgendes umfasst:
Bereitstellen einer Rückführungsmaterialkartusche in einen Kartuschenempfänger in dem 3D-Drucker, wobei der Kartuschenempfänger unterhalb einer Oberseite eines Baugehäuses angeordnet ist; und
Drucken (602) eines 3D-Objekts aus Zuführungsmaterial, das das Rückführungsmaterial umfasst;
wobei das Verfahren **gekennzeichnet ist durch:**
Empfangen (606) von überschüssigem Material in die Rückführungsmaterialkartusche in dem Kartuschenempfänger aus dem Druck des 3D-Objekts;
Empfangen, in einem Rückführungsmaterialgefäß, von Rückführungsmaterial aus der Rückführungsmaterialkartusche; und
Bereitstellen (604), über ein Fördersystem, von Rückführungsmaterial aus dem Rückführungsmaterialgefäß an einen oberen Teil des 3D-Druckers.

14. Verfahren nach Anspruch 13, wobei ein Drucken des 3D-Objekts ein Ausbilden des 3D-Objekts aus dem Zuführungsmaterial auf einer Bauplattform, die dem Baugehäuse des 3D-Druckers zugeordnet ist, umfasst, wobei ein Bereitstellen des Rückführungsmaterials an einen oberen Teil des 3D-Druckers ein Bereitstellen des Rückführungsmaterials über ein pneumatisches Fördersystem an über der Bauplattform umfasst, und wobei der Kartuschenempfänger näher an einer unteren Oberfläche des 3D-Druckers als an einer oberen Oberfläche des 3D-Druckers angeordnet ist.

## Revendications

1. Imprimante tridimensionnelle (3D) comprenant :
un boîtier externe comprenant une surface supérieure (108) et une surface inférieure (110) ;
un récepteur de cartouche (204) intégré à l'imprimante 3D au moins partiellement à l'intérieur du boîtier externe et disposé en dessous d'une partie supérieure de l'enceinte de construction de l'imprimante 3D, le récepteur de cartouche étant destiné à recevoir une cartouche de matériau de recyclage (516) de façon à mettre à disposition un matériau à partir de la cartouche de matériau en tant que matériau de construction pour l'impression ; et **caractérisé par** :
un récipient de matériau de recyclage (304) destiné à recevoir un matériau de recyclage à partir de la cartouche de matériau de recyclage ;
un système de transport (510) pour transporter le matériau de recyclage à partir du récipient de matériau de recyclage vers une partie supérieure de l'imprimante 3D.

2. Imprimante 3D selon la revendication 1, comprenant l'enceinte de construction et une plateforme de construction (104) pour former un objet 3D à partir de matériau de construction sur la plateforme de construction, le système de transport (510) comprenant un système de transport pneumatique.

3. Imprimante 3D selon la revendication 2, comprenant un applicateur de matériau de construction pour distribuer un matériau de construction à travers la plateforme de construction (104), le système de transport pneumatique étant destiné à transporter un matériau de construction vers l'applicateur de matériau de construction.

4. Imprimante 3D selon la revendication 3, dans laquelle l'applicateur de matériau de construction comprend une épandeuse de poudre disposée plus près de la surface supérieure du boîtier externe que du récepteur de cartouche.

5. Imprimante 3D selon la revendication 2, comprenant un module de solidification sélective (102) disposé au-dessus de la plateforme de construction (104) pour solidifier sélectivement des couches successives de matériau de construction sur la plateforme de construction pour former l'objet 3D, la solidification comprenant une fonte, un frittage ou une fusion, ou une quelconque combinaison de ceux-ci.

6. Imprimante 3D selon la revendication 1, dans laquelle le récepteur de cartouche (204) est disposé plus près de la surface inférieure (110) que de la surface supérieure (108).

7. Imprimante 3D selon la revendication 6, dans laquelle le récepteur de cartouche (204) est disposé à plus de 20 pouces (50,8 cm) au-dessus de la surface inférieure (110) du boîtier externe.

8. Imprimante 3D selon la revendication 1, dans laquelle le récepteur de cartouche (204) est disposé à moins de 42 pouces (106,68 cm) au-dessus de la surface inférieure (110) du boîtier externe.

9. Imprimante 3D selon la revendication 6, dans laquelle le récepteur de cartouche (204) est intégré à l'intérieur du boîtier externe.

10. Imprimante 3D selon la revendication 9, comprenant l'enceinte de construction à l'intérieur du boîtier externe, l'enceinte de construction étant destinée à recevoir un matériau de construction pour l'imprimante 3D pour imprimer un objet 3D, et le récepteur de cartouche (204) étant disposé à une hauteur dans une plage allant de 17 pouces (43,18 cm) à 42 pouces (106,68 cm) au-dessus de la surface inférieure (110) du boîtier externe.

11. Imprimante 3D selon la revendication 9, dans laquelle le système de transport intégré (510) comprend un système de transport pneumatique.

12. Imprimante 3D selon la revendication 9, comprenant une plateforme de construction (104) au moins partiellement à l'intérieur de l'enceinte de construction et sur laquelle un objet 3D est formé à partir du matériau de construction.

13. Procédé de fonctionnement d'un système d'impression tridimensionnel (3D) comprenant :
la fourniture d'une cartouche de matériau de recyclage dans un récepteur de cartouche dans l'imprimante 3D, le récepteur de cartouche étant disposé en dessous d'une partie supérieure d'une enceinte de construction ; et
l'impression (602) d'un objet 3D à partir d'un matériau d'alimentation comprenant un matériau de recyclage ;
le procédé étant **caractérisé par** :
la réception (606) d'un excédent de matériau dans la cartouche de matériau de recyclage dans le récepteur de cartouche à la suite de l'impression de l'objet 3D ;
la réception, dans un récipient de matériau de recyclage, de matériau de recyclage à partir de la cartouche de matériau de recyclage ; et
la fourniture (604), par l'intermédiaire d'un système de transport, de matériau de recyclage à partir du récipient de matériau de recyclage vers une partie supérieure de l'imprimante 3D.

14. Procédé selon la revendication 13, dans lequel l'impression de l'objet 3D comprend la formation de l'objet 3D à partir du matériau d'alimentation sur une plateforme de construction associée à l'enceinte de construction de l'imprimante 3D, la fourniture du matériau de recyclage à une partie supérieure de l'imprimante 3D comprenant la fourniture du matériau de recyclage par l'intermédiaire d'un système de transport pneumatique au-dessus de la plateforme de construction, et le récepteur de cartouche étant disposé plus près d'une surface inférieure de l'imprimante 3D que d'une surface supérieure de l'imprimante 3D.
